(19)

Europäisches
Patentamt
European
Patent Office
Office européen
des brevets

(11) **EP 4 694 047 A1**

(12) **EUROPEAN PATENT APPLICATION**
published in accordance with Art. 153(4) EPC

(43) Date of publication:
**11.02.2026 Bulletin 2026/07**

(21) Application number: **23930047.8**

(22) Date of filing: **06.12.2023**

(51) International Patent Classification (IPC):
**H04L 27/26** (2006.01)

(52) Cooperative Patent Classification (CPC):
**H04L 27/26**

(86) International application number:
**PCT/CN2023/136837**

(87) International publication number:
**WO 2024/198481 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.03.2023 CN 202310358559**

(71) Applicant: **Huawei Technologies Co., Ltd.
Shenzhen, Guangdong 518129 (CN)**

(72) Inventors:
• **NI, Yizhan
  Shenzhen, Guangdong 518129 (CN)**

• **YING, Tengda
  Shenzhen, Guangdong 518129 (CN)**
• **WANG, Chen
  Shenzhen, Guangdong 518129 (CN)**
• **LIU, Yahui
  Shenzhen, Guangdong 518129 (CN)**
• **BAI, Xiaofei
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, APPARATUS, DEVICE, SYSTEM, AND READABLE STORAGE MEDIUM**

(57) This application provides a communication method, apparatus, device, and system, and a readable storage medium, and relates to the communication field. The method includes: after obtaining a first-frequency signal and a second-frequency signal that have a same clock signal, separately performing frequency offset estimation on the first-frequency signal and the second-frequency signal to obtain a first-frequency offset estimation value and a second-frequency offset estimation value; and then correcting the second-frequency offset estimation value based on the first-frequency offset estimation value, that is, comprehensively performing calculation based on the first-frequency offset estimation value and the second-frequency offset estimation value to obtain a frequency offset estimation result. In this way, the frequency offset estimation value of the second-frequency signal with low accuracy can be corrected by using the first-frequency offset estimation value with high accuracy, to reduce an error of a frequency offset estimation result of the second-frequency signal, so that frequency offset correction performance of the second-frequency signal can be ensured in subsequent steps such as offset correction, and communication stability of the communication system is improved.

FIG. 4

## Description

This application claims priority to Chinese Patent Application No. 202310358559.0, filed with the China National Intellectual Property Administration on March 27, 2023 and entitled "COMMUNICATION METHOD, APPARATUS, DEVICE, AND SYSTEM, AND READABLE STORAGE MEDIUM", which is incorporated herein by reference in its entirety.

## TECHNICAL FIELD

This application relates to the communication field, and in particular, to a communication method, apparatus, device, and system, and a readable storage medium.

## BACKGROUND

In a communication system that supports a plurality of operating frequency bands, when frequency offset estimation is performed on a signal at a higher operating frequency band, greater interference exists due to a performance limitation of a high-frequency component, causing the frequency offset estimation to be inaccurate.

A higher operating frequency band of the communication system indicates a larger frequency offset jitter range. Therefore, when frequency offset estimation is inaccurate, the signal at the higher operating frequency band is more likely to exceed a frequency offset threshold tolerable to the communication system, resulting in the communication system failing to communicate. Consequently, communication stability of the communication system is affected.

## SUMMARY

This application provides a communication method, apparatus, device, and system, and a readable storage medium, so that a problem of inaccurate frequency offset estimation of a high-frequency band signal in a communication system that supports a plurality of operating frequency bands can be resolved, to improve communication stability of the communication system.

According to a first aspect, a communication method is provided. The communication method includes: after obtaining a first-frequency signal and a second-frequency signal that have a same clock signal, separately performing frequency offset estimation on the first-frequency signal and the second-frequency signal to obtain a first-frequency offset estimation value and a second-frequency offset estimation value; and then comprehensively determining a final frequency offset estimation result based on the first-frequency offset estimation value and the second-frequency offset estimation value.

The communication method may be performed by a communication device (also referred to as a computing device) in a communication system that supports a plurality of operating frequency bands. The first-frequency signal is a signal corresponding to a low operating frequency band in the communication device, and the second-frequency signal is a signal corresponding to a high operating frequency band in the communication device.

According to the communication method, in the communication system that supports the plurality of operating frequency bands, when accuracy of frequency offset estimation of the second-frequency signal is low, the final frequency offset estimation result is comprehensively determined based on frequency offset estimation values of the first-frequency signal and the second-frequency signal, to reduce impact of the frequency offset estimation value of the second-frequency signal with low accuracy of frequency offset estimation on the frequency offset estimation result, and reduce an error of the final frequency offset estimation result, so that frequency offset correction performance can be ensured in subsequent steps such as offset correction, and communication stability of the communication system is improved.

In a possible implementation, when determining the frequency offset estimation result based on the first-frequency offset estimation value and the second-frequency offset estimation value, the communication device performs weighted processing on the first-frequency offset estimation value and the second-frequency offset estimation value to obtain the frequency offset estimation result. In this way, in a process of calculating the final frequency offset estimation result, the first-frequency offset estimation value and the second-frequency offset estimation value are introduced through the weighted processing, and the frequency offset estimation result is comprehensively calculated based on the first-frequency offset estimation value and the second-frequency offset estimation value, to reduce a frequency offset estimation error caused by the second-frequency signal.

Optionally, a specific step of the weighted processing may include: The communication device adds a product of the first-frequency offset estimation value and a first-frequency weight to a product of the second-frequency offset estimation value and a second-frequency weight to obtain the frequency offset estimation result.

In the foregoing weighted processing, the weight of the first-frequency offset estimation value and the weight of the second-frequency offset estimation value may be values obtained based on prior experience of simulation.

In a possible implementation, before performing weighted processing on the first-frequency offset estimation value and the second-frequency offset estimation value, the communication device first performs normalization processing on the first-frequency offset estimation value and the second-frequency offset estimation value, to avoid adverse impact caused by singular sample data of the second-frequency offset estimation value and the first-frequency offset estimation value, and improve accuracy of the frequency offset estimation result obtained through the subsequent weighted processing.

In a possible implementation, after receiving a first-frequency radio frequency signal and a second-frequency radio frequency signal, the communication device separately performs analog domain processing on the first-frequency radio frequency signal and the second-frequency radio frequency signal to obtain the first-frequency signal and the second-frequency signal.

Optionally, steps of analog domain processing include down-conversion, filtering, and amplification.

In a possible implementation, each time after obtaining the first-frequency signal and the second-frequency signal and performing frequency offset estimation to obtain the first-frequency offset estimation value and the second-frequency offset estimation value, the communication device latches the first-frequency offset estimation value and the second-frequency offset estimation value, and replaces existing latched values. In this way, each time after receiving a signal, the communication device re-latches the frequency offset estimation value of the second-frequency signal and the frequency offset estimation value of the first-frequency signal, to implement real-time update of the frequency offset estimation, and improve overall stability of the communication system in a data receiving and sending process.

In a possible implementation, after obtaining the frequency offset estimation result, the communication device further performs frequency offset correction based on the frequency offset estimation result. In this way, actual frequency offset correction is performed on the second-frequency signal based on the frequency offset estimation result, so that frequency offset correction of a signal at a second-frequency band is more accurate, and performance stability of the communication system is improved.

In a possible implementation, a frequency difference between the first-frequency signal and the second-frequency signal is greater than a preset difference.

Optionally, the preset difference may be any value greater than or equal to 8 gigahertz (gigahertz, GHz), 10 GHz, or the like.

In a possible implementation, the first-frequency signal is a signal in a sub-7G frequency band, and the second-frequency signal is a signal in a millimeter-wave frequency band.

According to a second aspect, a communication apparatus is provided. The communication apparatus includes: a transceiver module, configured to obtain a first-frequency signal and a second-frequency signal, where the first-frequency signal and the second-frequency signal are baseband signals having a same clock signal; and a frequency offset estimation module, configured to separately perform frequency offset estimation on the first-frequency signal and the second-frequency signal to obtain a first-frequency offset estimation value and a second-frequency offset estimation value, and determine a frequency offset estimation result based on the first-frequency offset estimation value and the second-frequency offset estimation value.

In a possible implementation, the frequency offset estimation module is specifically configured to perform weighted processing on the first-frequency offset estimation value and the second-frequency offset estimation value to obtain the frequency offset estimation result.

In a possible implementation, the frequency offset estimation module is specifically configured to add a product of the first-frequency offset estimation value and a first-frequency weight to a product of the second-frequency offset estimation value and a second-frequency weight to obtain the frequency offset estimation result.

In a possible implementation, the frequency offset estimation module is specifically configured to perform normalization processing on the first-frequency offset estimation value and the second-frequency offset estimation value.

In a possible implementation, the transceiver module is specifically configured to separately perform analog domain processing on a received first-frequency radio frequency signal and a received second-frequency radio frequency signal to obtain the first-frequency signal and the second-frequency signal.

In a possible implementation, the transceiver module is specifically configured to: replace an existing latched value of the first-frequency offset estimation value with the first-frequency offset estimation value; and replace an existing latched value of the second-frequency offset estimation value with the second-frequency offset estimation value.

In a possible implementation, the communication apparatus further includes a frequency offset correction module, configured to perform frequency offset correction based on the frequency offset estimation result.

In a possible implementation, a frequency difference between the first-frequency signal and the second-frequency signal is greater than a preset difference.

Optionally, the preset difference may be any value greater than or equal to 8 GHz, 10 GHz, or the like.

In a possible implementation, the first-frequency signal is a signal in a sub-7 frequency band, and the second-frequency signal is a signal in a millimeter-wave frequency band.

It should be noted that, the communication apparatus according to the second aspect may be a terminal device or a network device, or may be a chip (system) or another part or component that may be arranged in the terminal device or the network device, or may be an apparatus that includes the terminal device or the network device. This is not limited in this application.

According to a third aspect, a communication device is provided, and includes a memory and a processor, and the memory is configured to store a group of computer instructions. When executing the group of computer instructions, the processor is configured to perform an operation step of the communication method in any one of possible designs of the first aspect.

According to a fourth aspect, a communication system is provided, and includes a receiver and a transmitter, the transmitter is configured to send a first-frequency radio frequency signal and a second-frequency radio frequency signal, and the receiver is configured to receive the first-frequency radio frequency signal and the second-frequency radio frequency signal and perform an operation step of the communication method in any one of possible designs of the first aspect based on the first-frequency radio frequency signal and the second-frequency radio frequency signal.

In addition, for technical effects of the communication apparatus according to the second aspect, the communication device according to the third aspect, and the communication system according to the fourth aspect, refer to technical effects of the communication method according to the first aspect. Details are not described herein again.

According to a fifth aspect, a computer-readable storage medium is provided, and includes computer software instructions. When the computer software instructions are run on a computer, the computer is enabled to perform an operation step of the method in any one of possible implementations of the first aspect.

According to a sixth aspect, a computer program product is provided. When the computer program product runs on a computer, the computer is enabled to perform an operation step of the method in any one of possible implementations of the first aspect.

Based on the implementations provided in the foregoing aspects, further combination may be performed in this application to provide more implementations.

## BRIEF DESCRIPTION OF DRAWINGS

FIG. 1a is a diagram of a frequency offset threshold in a communication system;

FIG. 1b is a diagram of a multi-frequency band processing module in a communication system;

FIG. 1c is a diagram of a relationship between accuracy of frequency offset estimation and a signal to interference plus noise ratio (Signal to Interference plus Noise Ratio, SNR) in a communication system;

FIG. 2 is a diagram of an architecture of a communication system according to this application;

FIG. 3 is a diagram of a software architecture of a receiver according to this application;

FIG. 4 is a schematic flowchart of a communication method according to this application;

FIG. 5a is a schematic flowchart of analog domain processing according to this application;

FIG. 5b is a schematic flowchart of frequency offset estimation and frequency offset correction according to this application;

FIG. 6 is a schematic flowchart of frequency offset estimation according to this application;

FIG. 7 is a schematic flowchart of weighted processing according to this application;

FIG. 8 is a diagram of a communication apparatus according to this application; and

FIG. 9 is a diagram of a structure of a communication device according to this application.

## DESCRIPTION OF EMBODIMENTS

Technical solutions in embodiments of this application may be applied to various communication systems, such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

Each aspect, embodiment, or feature is presented in this application with reference to a system that may include a plurality of devices, components, modules, and the like. It should be understood and appreciated that, each system may include another device, component, module, and the like, and/or may not include all devices, components, modules, and the like discussed with reference to accompanying drawings. In addition, a combination of these solutions may also be used.

In addition, in embodiments of this application, words such as "example" "for example", "such as" are used for representing giving an example, an illustration, or a description. In this application, any embodiment or design scheme described as an "example" should not be construed as being more preferred or having more advantages than another embodiment or design scheme. Rather, the word "example" is used for presenting a concept in a specific manner.

In embodiments of this application, terms "information (information)", "signal (signal)", "message (message)", "channel (channel)", and "signaling (signaling)" may sometimes be interchangeably used. It should be noted that, meanings expressed by the terms are consistent when differences of the terms are not emphasized. Terms "of (of)", "corresponding, relevant (corresponding, relevant)", and "corresponding (corresponding)" may sometimes be interchangeably used. It should be noted that, meanings expressed by the terms are consistent when differences of the terms are not emphasized.

To make descriptions of the following embodiments clear and concise, the following describes related technologies.

(1) Frequency band

A frequency band used in wireless communication is only a small part of an electromagnetic wave frequency band, and defines a frequency range of a radio wave. To appropriately use spectrum resources and ensure that various industries and services do not interfere with each other when using the spectrum resources, the International Telecommunication Union-Radiocommunication Sector (ITU-R) has issued international radio rules, which specify a uniform frequency range for radio frequency bands used by various services and communication systems.

According to the international radio rules, radio communication is classified into more than 50 different services, such as aviation communication, maritime communication, terrestrial communication, satellite communication, broadcast, television, radio navigation, positioning, telemetry, remote control, and space exploration, and a specific frequency band is specified for each service.

For example, a long term evolution (long term evolution, LTE) standard has four frequency bands, namely, a frequency band A, a frequency band D, a frequency band E, and a frequency band F, and frequency ranges thereof are in turn 2010 megahertz (megahertz, MHz) to 2025 MHz, 2570 MHz to 2620 MHz, 2320 MHz to 2370 MHz, and 1880 MHz to 1920 MHz, which respectively correspond to frequency bands of 34, 38, 40, and 39.

(2) Frequency offset

The frequency offset (frequency offset) is an amplitude of frequency swing of a frequency-modulated wave, usually refers to a maximum frequency offset, and affects spectrum bandwidth of the frequency-modulated wave.

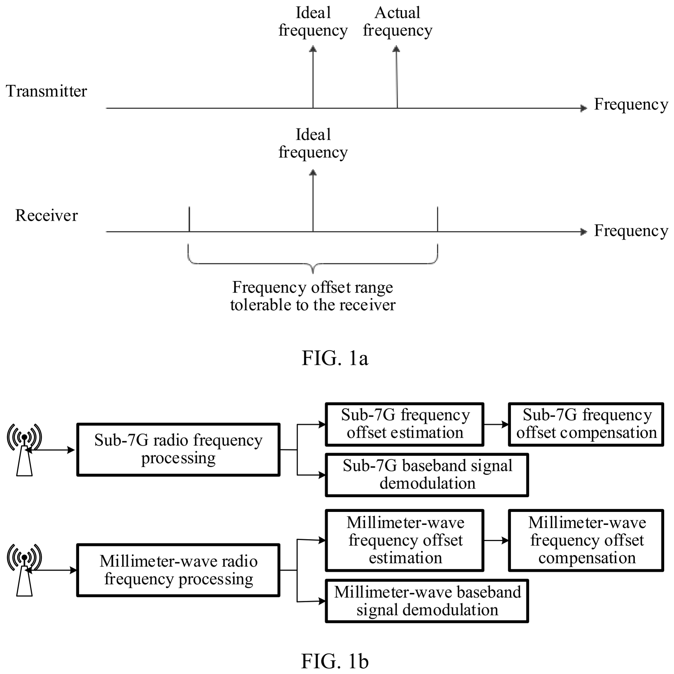

As shown in FIG. 1a, a premise that two communication devices in a communication system may communicate with each other is that a frequency difference between a transmitted signal and a received signal is maintained within a range acceptable to the system, and a range of a frequency difference tolerable to a receiver in the communication system is referred to as a frequency offset threshold.

A frequency of a transmitter or the receiver is determined by a characteristic of a reference clock source (generally referred to as a crystal or a crystal oscillator) inside the transmitter or the receiver. Usually, the crystal or the crystal oscillator has a ppm index, which indicates a jitter range of a crystal frequency, and ppm stands for parts per million (parts per million). When indicating a frequency offset, the ppm index indicates an allowable offset value at a specific center frequency, and the frequency is in a unit of hertz. For example, an ideal frequency of the transmitter or the receiver is 5 GHz, and a jitter index of the crystal or the crystal oscillator inside the transmitter or the receiver is $\pm20$ ppm. In this case, a frequency offset variation range of the transmitter or the receiver is 5 GHz$\times\pm20\times10^{-6}=\pm100$ kilohertz (kilohertz, KHz), that is, an actual frequency of the transmitter or the receiver is any frequency from 4.999999 GHz to 5.000001 GHz. If the jitter index of the crystal remains unchanged, a higher operating frequency band of the system indicates that a larger frequency offset jitter range is generated, and the frequency offset threshold tolerable to the system (generally, a frequency offset tolerable to the system is a fixed value, and is determined by a communication standard and a system capability) is more likely to be exceeded, resulting in the signal failing to be received and the system failing to communicate.

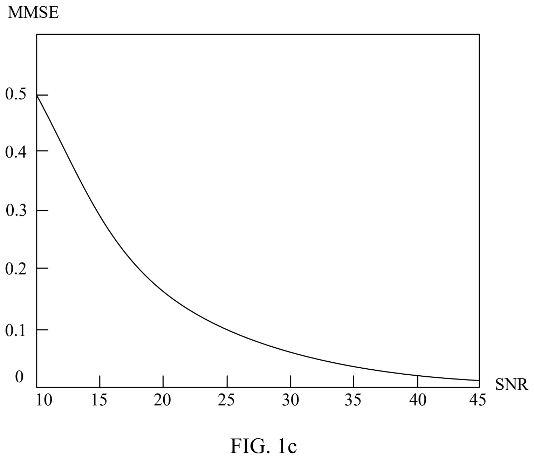

In a communication system that supports a plurality of operating frequency bands, a sub-7G frequency band and a millimeter-wave frequency band are used as an example. As shown in FIG. 1b, each of the operating frequency bands has independent frequency offset estimation and frequency offset correction procedures, and a frequency offset tolerance capability is determined by a baseband and is independent of the operating frequency band. Therefore, when frequency offset estimation is performed on a frequency band signal at a higher operating frequency band, due to a performance limitation of a high-frequency band component, quality of the frequency band signal at the higher operating frequency band is poorer than that of a signal at a lower operating frequency band, greater interference exists, and the frequency offset is larger. However, as shown in FIG. 1c, accuracy of frequency offset estimation (a minimum mean squared error (minimum mean squared error, MMSE) is used as an example) increases with an increase of a signal to interference plus noise ratio (Signal to Interference plus Noise Ratio, SNR). Therefore, frequency offset estimation and correction solutions that are more accurate are needed for a high-frequency signal in the communication system, so that the frequency offset of the communication system being less than the frequency offset threshold can be ensured, to ensure communication stability of the communication system.

This application provides a communication method, and specifically relates to a communication method for comprehensively determining a final frequency offset estimation result of a communication system based on a frequency offset estimation result of a first-frequency band signal and a frequency offset estimation result of a second-frequency band signal in a communication device that supports a plurality of frequency bands. To be specific, after obtaining baseband signals such as a first-frequency signal and a second-frequency signal that have a same clock signal, the communication device separately performs frequency offset estimation on the first-frequency signal and the second-frequency signal to obtain a first-frequency offset estimation value and a second-frequency offset estimation value; and then determines a frequency offset estimation result of the communication device based on the first-frequency offset estimation value and the second-frequency offset estimation value. In this way, when a frequency of the second-frequency signal being higher than a frequency of the first-frequency signal causes accuracy of frequency offset estimation of the second-frequency signal to be low, the final frequency offset estimation result is comprehensively determined based on frequency offset estimation values of the first-frequency signal and the second-frequency signal, to reduce impact of the frequency offset estimation value of the second-frequency signal with low accuracy on the frequency offset estimation result, and reduce an error of the final frequency offset estimation result, so that frequency offset correction performance can be ensured in subsequent steps such as offset correction, and communication stability of the communication system is improved.

The following describes in detail implementations of embodiments of this application with reference to the accompanying drawings.

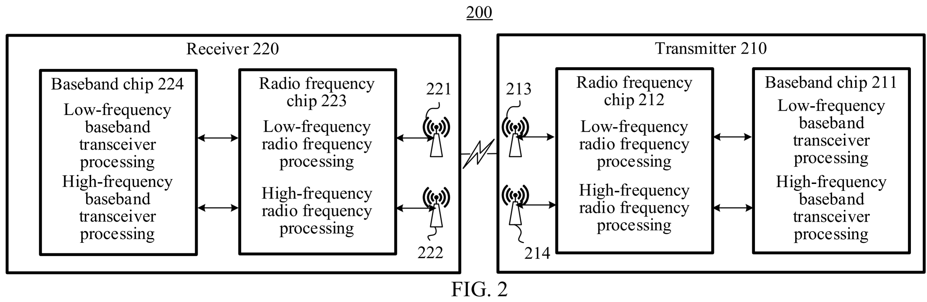

FIG. 2 is a diagram of an architecture of a communication system according to this application. In the figure, high-frequency and low-frequency are only relative between two frequency bands, and do not specifically refer to a specific frequency band. The communication system 200 includes a transmitter 210 and a receiver 220.

The transmitter 210 includes a baseband chip 211, a radio frequency chip 212, a first-frequency communication antenna 213, and a second-frequency communication antenna 214.

The baseband chip 211 is configured to process a signal, for example, perform frequency offset estimation and frequency offset correction, and perform transmission of a baseband signal obtained through processing to the radio frequency chip 212.

Optionally, the baseband chip 211 separately supports processing of a first-frequency signal and a second-frequency signal, and a frequency difference between the first-frequency signal and the second-frequency signal may be greater than or equal to 10 GHz, to ensure that accuracy of a frequency offset estimation result of a lower-frequency signal is higher than accuracy of a frequency offset estimation result of a higher-frequency signal in the first-frequency signal and the second-frequency signal, so that accuracy of a final frequency offset estimation result that is comprehensively determined based on frequency offset estimation values of the first-frequency signal and the second-frequency signal is higher than that of a frequency offset estimation value of the second-frequency signal.

For example, the baseband chip 211 separately supports processing of a signal at a sub-7G frequency band (for example, 2.4 GHz, 5 GHz, or 6 GHz) and a signal at a millimeter-wave frequency band (for example, 26.5 GHz to 300 GHz).

Communication characteristics of the millimeter-wave frequency band include: large communication signal bandwidth; a small communication coverage area; and a low system link SNR. Communication characteristics of the sub-7G frequency band include: small communication signal bandwidth; a large communication coverage area; and a high system link SNR.

The radio frequency chip 212 is configured to process the baseband signal, for example, perform power adjustment and frequency conversion, where the radio frequency chip 212 is a bridge for mutual conversion between a radio frequency signal and a baseband signal, to convert the baseband signal into the radio frequency signal. For example, the radio frequency chip 212 separately supports processing of the signal in the sub-7G frequency band and the signal in the millimeter-wave frequency band.

The first-frequency communication antenna 213 is configured to transmit, to the space, a first-frequency communication signal in a radio frequency signal that is output by the radio frequency chip 212, and the second-frequency communication antenna 214 is configured to transmit, to the space, a second-frequency communication signal in the radio frequency signal that is output by the radio frequency chip 212.

Optionally, bandwidth of the first-frequency communication antenna 213 is determined by a frequency range of the first-frequency communication signal, and bandwidth of the second-frequency communication antenna 214 is determined by a frequency range of the second-frequency communication signal. In this embodiment, the frequency range of the first-frequency communication signal is lower than a frequency range frequency band of the second-frequency communication signal, and a frequency difference between the first-frequency communication signal and the second-frequency communication signal is greater than a preset difference. For example, the first-frequency communication signal belongs to the sub-7G frequency band, and the second-frequency communication signal belongs to the millimeter-wave frequency band.

The receiver 220 includes a first-frequency communication antenna 221, a second-frequency communication antenna 222, a radio frequency chip 223, and a baseband chip 224.

The first-frequency communication antenna 221 is configured to receive the first-frequency communication signal in the radio frequency signal in the space, and the second-frequency communication antenna 222 is configured to receive the second-frequency communication signal in the radio frequency signal in the space.

The radio frequency chip 223 is configured to process radio frequency signals received by the first-frequency communication antenna 221 and the second-frequency communication antenna 222, for example, perform power adjustment and frequency conversion, to convert the radio frequency signals into baseband signals. For example, the radio frequency chip 223 separately supports processing of a signal in the sub-7G frequency band and a signal in a millimeter-wave frequency band.

The baseband chip 224 is configured to process a baseband signal whose transmission is performed by the radio frequency chip 223, for example, perform frequency offset estimation and frequency offset correction. For example, the baseband chip 224 separately supports processing of the signal in the sub-7G frequency band and signal in the millimeter-wave frequency band.

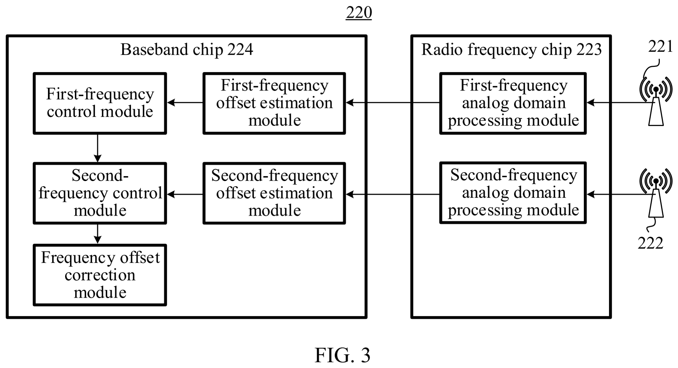

As shown in FIG. 3, at a software layer, the radio frequency chip 223 includes a first-frequency analog domain processing module and a second-frequency analog domain processing module, and the baseband chip 224 separately includes a first-frequency offset estimation module, a first-frequency control module, a second-frequency offset estimation module, and a second-frequency control module.

The first-frequency offset estimation module is configured to perform frequency offset estimation on a first-frequency signal whose transmitted from the first-frequency analog domain processing module, to obtain a first-frequency offset estimation value. The first-frequency control module is configured to process the first-frequency offset estimation value, and send the first-frequency offset estimation value to the second-frequency control module.

The second-frequency offset estimation module is configured to perform frequency offset estimation on a second-frequency signal transmitted from the second-frequency analog domain processing module, to obtain a second-frequency offset estimation value. The second-frequency control module is configured to process the first-frequency offset estimation value, for example, comprehensively determine a frequency offset estimation result based on the first-frequency offset estimation value and the second-frequency offset estimation value.

The receiver 220 may further include a frequency offset correction module, configured to calculate a frequency offset adjustment amount based on the frequency offset estimation result obtained by the second-frequency offset estimation module, and deliver adjustment information based on the frequency offset adjustment amount to perform frequency offset correction.

Optionally, the first-frequency offset estimation module and the second-frequency offset estimation module may be synchronization (Synchronization, SYNC) processing modules, and the first-frequency control module and the second-frequency control module may be software medium access control (software medium access control, SMAC) processing modules.

FIG. 2 and FIG. 3 are merely diagrams of a system architecture or a module architecture according to an embodiment of this application. Position relationships between devices, components, modules, and the like shown in FIG. 2 and FIG. 3 do not constitute any limitation. In addition, the communication system 200 may further include another device, and the radio frequency chip 223 may further include another module. This is not shown in FIG. 2 and FIG. 3. For example, a quantity of communication antennas that are included in the system is not limited in embodiments of this application. The radio frequency chip 223 may further include a frequency offset estimation module, an analog domain processing module, and the like at another frequency band.

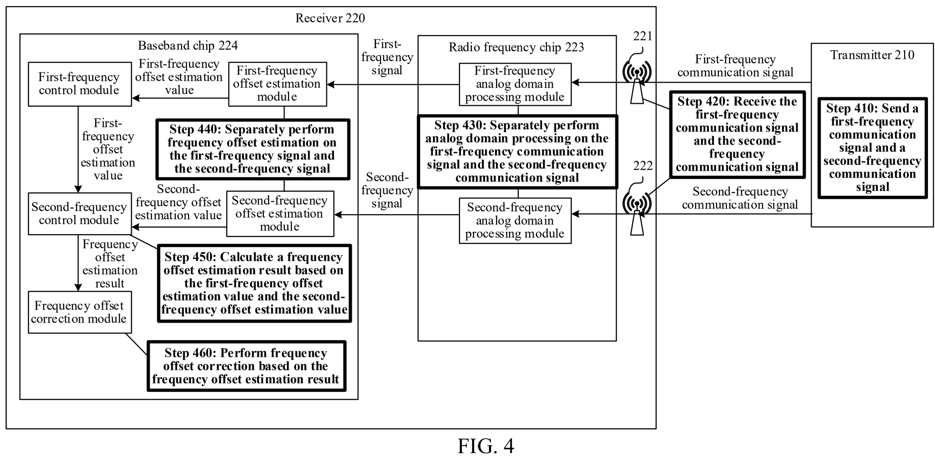

Next, refer to FIG. 4. A communication method provided in this application is described in detail by using the communication system 200 shown in FIG. 2 as an example. In FIG. 4, a straight line with an arrow indicates a signal transmission direction, and a straight line without an arrow indicates a relationship between a step and an execution body.

Step 410: A transmitter 210 sends a first-frequency communication signal and a second-frequency communication signal.

A radio frequency chip 212 in the transmitter 210 converts a baseband signal transmitted from a baseband chip 211 into a radio frequency signal, and a first-frequency communication antenna 213 and a second-frequency communication antenna 214 send the radio frequency signal.

Optionally, the baseband signal transmitted by the baseband chip 211 to the radio frequency chip 212 includes a first-frequency baseband signal and a second-frequency baseband signal. The radio frequency chip 212 converts the first-frequency baseband signal into a first-frequency radio frequency signal, and converts the second-frequency baseband signal into a second-frequency radio frequency signal. The first-frequency communication antenna 213 transmits the first-frequency radio frequency signal, namely, the first-frequency communication signal, to the space, and the second-frequency communication antenna 214 transmits the second-frequency radio frequency signal, namely, the second-frequency communication signal, to the space.

For example, in the first-frequency baseband signal, the first-frequency radio frequency signal, the second-frequency baseband signal, and the second-frequency radio frequency signal, a first frequency may be in a sub-7G frequency band, and a second frequency may be in a millimeter-wave frequency band.

Optionally, an operating frequency band of the first-frequency communication antenna 213 corresponds to a frequency band of the first-frequency radio frequency signal, and an operating frequency band of the second-frequency communication antenna 214 corresponds to a frequency band of the second-frequency radio frequency signal.

Step 420: A receiver 220 receives the first-frequency communication signal and the second-frequency communication signal.

The receiver 220 receives the first-frequency communication signal by using a first-frequency communication antenna 221 and receives the second-frequency communication signal by using a second-frequency communication antenna 222.

Optionally, an operating frequency band of the first-frequency communication antenna 221 corresponds to a frequency band of the first-frequency communication signal, and an operating frequency band of the second-frequency communication antenna 222 corresponds to a frequency band of the second-frequency communication signal.

Step 430: The receiver 220 separately performs analog domain processing on the first-frequency communication signal and the second-frequency communication signal to obtain a first-frequency signal and a second-frequency signal.

In the analog domain processing, the receiver 220 separately performs down-conversion, filtering, and amplification on the first-frequency communication signal and the second-frequency communication signal to obtain the first-frequency signal and the second-frequency signal.

Optionally, the analog domain processing is performed by a radio frequency chip 223 in the receiver 220. The analog domain processing of the first-frequency communication signal is performed by a first-frequency analog domain processing module of the radio frequency chip 223, and the analog domain processing of the second-frequency communication signal is performed by a second-frequency analog domain processing module of the radio frequency chip 223.

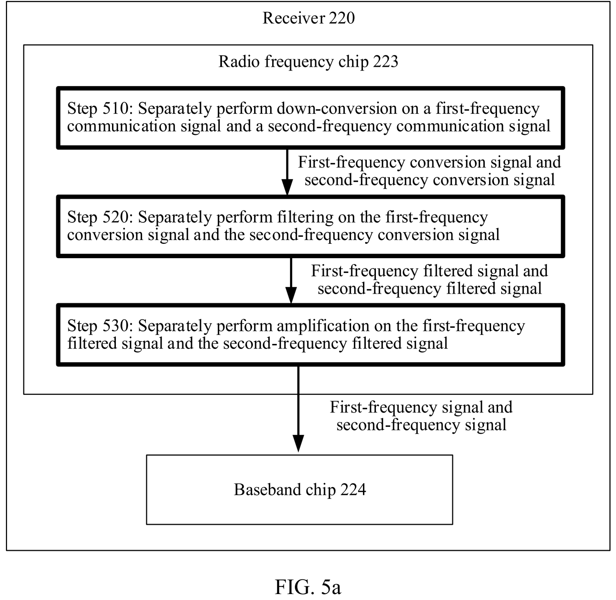

For specific steps of the foregoing analog domain processing, refer to step 510 to step 530 shown in FIG. 5a. Details are not described herein.

Step 440: The receiver 220 separately performs frequency offset estimation on the first-frequency signal and the second-frequency signal to obtain a first-frequency offset estimation value and a second-frequency offset estimation value.

The receiver 220 performs frequency offset estimation on the first-frequency signal by using a repeated signal included in the first-frequency signal, to obtain the first-frequency offset estimation value, and performs frequency offset estimation on the second-frequency signal by using a repeated signal included in the second-frequency signal, to obtain the second-frequency offset estimation value.

Optionally, the frequency offset estimation is performed by a baseband chip 224 in the receiver 220. First-frequency frequency offset estimation is performed by a first-frequency offset estimation module of the baseband chip 224, and second-frequency frequency offset estimation is performed by a second-frequency offset estimation module of the baseband chip 224.

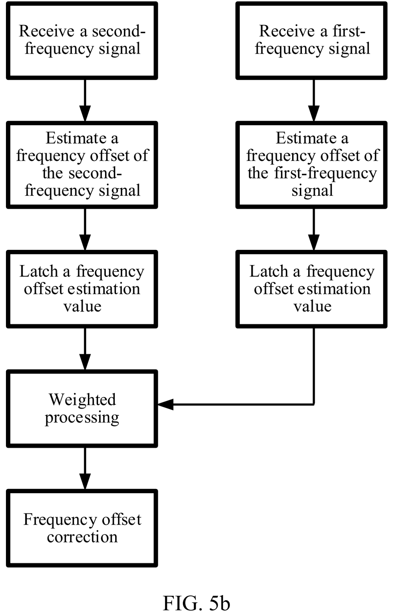

Optionally, as shown in an overall procedure of frequency offset estimation and frequency offset correction in FIG. 5b, after obtaining the first-frequency offset estimation value and the second-frequency offset estimation value, the receiver 220 latches the first-frequency offset estimation value and the second-frequency offset estimation value. In addition, each time after receiving the first-frequency communication signal and the second-frequency communication signal and obtaining the first-frequency offset estimation value and the second-frequency offset estimation value through calculation, the receiver 220 refreshes and re-latches the first-frequency offset estimation value and the second-frequency offset estimation value.

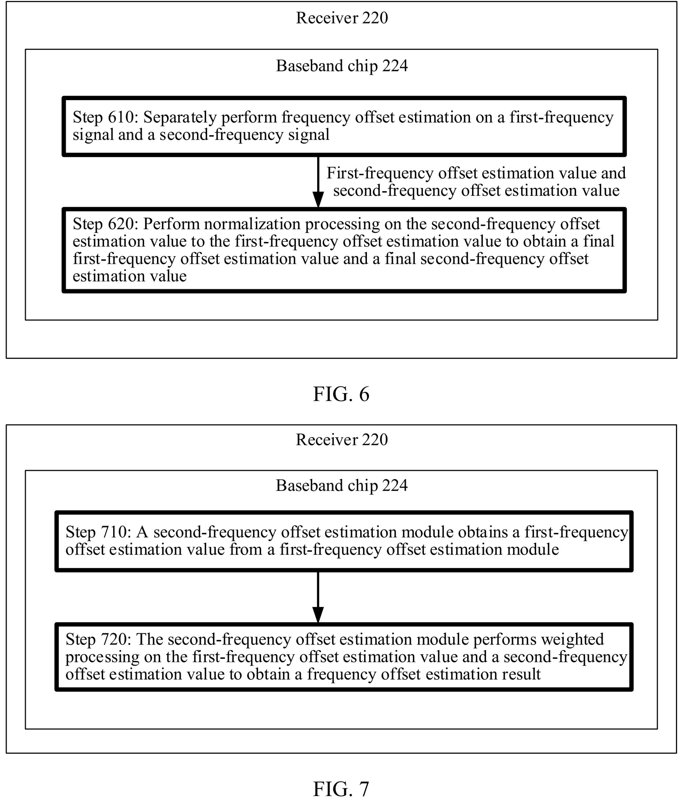

For specific steps of the foregoing frequency offset estimation, refer to step 610 and step 620 shown in FIG. 6. Details are not described herein.

Step 450: The receiver 220 calculates a frequency offset estimation result based on the first-frequency offset estimation value and the second-frequency offset estimation value.

In a possible implementation, the receiver 220 performs weighted processing on the first-frequency offset estimation value and the second-frequency offset estimation value to obtain the frequency offset estimation result.

In a possible implementation, the receiver 220 adds a product of the first-frequency offset estimation value and a first-frequency weight to a product of the second-frequency offset estimation value and a second-frequency weight to obtain the frequency offset estimation result.

Weights of different frequencies may be configured based on an actual requirement, so that degrees of impact of the first-frequency offset estimation value and the second-frequency offset estimation value on calculation of the frequency offset estimation result are different. This is not limited in this embodiment of this application.

In a possible implementation, the receiver 220 adds the product of the first-frequency offset estimation value and the first-frequency weight to the product of the second-frequency offset estimation value and a second-frequency weight to calculate an average value, and uses the average value as the frequency offset estimation result.

Optionally, the weighted processing is performed by the baseband chip 224 in the receiver 220. The first-frequency offset estimation module sends the first-frequency offset estimation value to the second-frequency offset estimation module, and the second-frequency offset estimation module performs weighted processing on the first-frequency offset estimation value and the second-frequency offset estimation value to obtain the frequency offset estimation result.

For specific steps of the foregoing weighted processing, refer to step 710 and step 720 shown in FIG. 7. Details are not described herein.

In another possible implementation, the receiver 220 may use an average value of the first-frequency offset estimation value and the second-frequency offset estimation value as the frequency offset estimation result.

Step 460: The receiver 220 performs frequency offset correction based on the frequency offset estimation result.

The receiver 220 corrects a crystal frequency based on the frequency offset estimation result, to complete frequency offset correction of the receiver 220. The first-frequency signal and the second-frequency signal are co-baseband signals having a same clock signal, and frequencies of the first-frequency signal and the second-frequency signal are controlled by a same crystal inside the receiver 220 as a whole. Therefore, after correcting the crystal frequency based on the frequency offset estimation result, the receiver 220 can complete unified correction of the first-frequency signal and the second-frequency signal.

A radio frequency operating frequency of the receiver 220 is generated by the crystal through phase-locked loop frequency multiplication. For example, a crystal operating frequency is 10 MHz, and a radio frequency operating frequency is 5.5 GHz. In this case, the phase-locked loop is used as a frequency multiplier with a frequency multiplication factor of 550. To correct a frequency offset of an operating frequency of the system, the correction may be performed by adjusting the crystal frequency. For example, to adjust a frequency offset of a radio frequency by 10 MHz, adjustment may be performed by 10/550 MHz on the crystal. Therefore, the receiver 220 implements final frequency offset correction by modifying the crystal operating frequency.

Based on the foregoing step 410 to step 460, in a communication system that supports a plurality of operating frequency bands, a frequency offset jitter range generated by the second-frequency signal at a higher-operating frequency band is larger than a frequency offset jitter range generated by the first-frequency signal at a lower-operating frequency band, resulting in a larger error of the frequency offset estimation value of the second-frequency signal. A final frequency offset estimation value is comprehensively determined based on the first-frequency offset estimation value and the second-frequency signal, to reduce an error caused by a frequency offset estimation result of the second-frequency signal, so that frequency offset correction performance of the second-frequency signal can be ensured in subsequent steps such as offset correction, and communication stability of the communication system is improved.

The foregoing describes the communication method as a whole with reference to FIG. 4. The following describes in detail specific steps of analog domain processing with reference to FIG. 5a. The analog domain processing may include the following step 510 to step 530.

Step 510: A receiver 220 separately performs down-conversion on a first-frequency communication signal and a second-frequency communication signal to obtain a first-frequency conversion signal and a second-frequency conversion signal.

The receiver 220 separately performs down-conversion on the first-frequency communication signal and the second-frequency communication signal to restore signals to baseband signals, namely, the first-frequency conversion signal and the second-frequency conversion signal.

For example, the second-frequency communication signal is $y_1(t) = X_1(t) * COS(2\pi * f_1 * t)$, and the first-frequency communication signal is $y_2(t) = X_2(t) * COS(2\pi * f_2 * t)$.

$f_1 = 45 * 10^9$, and $X_1(t)$ is a second-frequency original signal. $f_2 = 5.5 * 10^9$, and $X_2(t)$ is a first-frequency original signal.

A second-frequency part is still used as an example. A manner in which the receiver 220 restores the signals to the baseband signals through down-conversion may be as the following formula (1).

$$y_1(t) = X_1(t) * COS(2\pi * f_1 * t) * COS(2\pi * f_1 * t) = \frac{1}{2} * X_1(t) * (1 + COS(2 *$$

$$f_1 * t)) \, (1)$$

$\frac{1}{2} * X_1(t) * (1 + COS(2 * f_1 * t))$ is the second-frequency conversion signal obtained through down-conversion.

Down-conversion of a first-frequency part is the same as that of the second-frequency part. Details are not described herein again.

Step 520: The receiver 220 separately performs filtering on the first-frequency conversion signal and the second-frequency conversion signal to obtain a first-frequency filtered signal and a second-frequency filtered signal.

The receiver 220 separately performs filtering on the first-frequency conversion signal and the second-frequency conversion signal by using a filter, to obtain the first-frequency filtered signal and the second-frequency filtered signal.

For example, the second-frequency conversion signal is $y_1(\text{t}) = \frac{1}{2} * X_1(\text{t}) * (1 + COS(2 * f_1 * t))$, a signal of $2 * f_1$ is removed via the filter, and a remaining second-frequency filtered signal is $\frac{1}{2} * X_1(\text{t})$. Filtering of the first-frequency part is the same as that of the second-frequency part. Details are not described herein again.

Step 530: The receiver 220 separately performs amplification on the first-frequency filtered signal and the second-frequency filtered signal to obtain a first-frequency signal and a second-frequency signal.

The receiver 220 separately performs amplification on the first-frequency filtered signal and the second-frequency filtered signal by using a signal amplifier, to obtain the first-frequency original signal, namely, the first-frequency signal, and the second-frequency original signal, namely, the second-frequency signal.

For example, the second-frequency filtered signal is $\frac{1}{2} * X_1(\text{t})$, an amplified second-frequency signal is $X_1(\text{t})$, the first-frequency filtered signal is $\frac{1}{2} * X_2(\text{t})$, and an amplified first-frequency signal is $X_2(\text{t})$.

Optionally, step 510 to step 530 that are included in the foregoing analog domain processing may be performed by a radio frequency chip 223. The first-frequency part in analog domain processing is performed by a first-frequency analog domain processing module, and the second-frequency part is performed by a second-frequency analog domain processing module.

In this way, before a subsequent frequency offset estimation step is performed, the analog domain processing of the signals is completed based on step 510 to step 530, and a baseband chip 224 can perform subsequent baseband processing like frequency offset estimation based on the first-frequency signal and the second-frequency signal that are sent by the radio frequency chip 223.

The following describes in detail specific steps of frequency offset estimation with reference to FIG. 6. The frequency offset estimation may include the following step 610 and step 620.

Step 610: A receiver 220 separately performs frequency offset estimation on a first-frequency signal and a second-frequency signal to obtain a first-frequency offset estimation value and a second-frequency offset estimation value.

For example, the receiver 220 performs frequency offset estimation based on a repetition symbol (a repetition periodicity of 0.8 μs) of a non-HT short training field (non-HT short training field, L-STF) signal carried in the second-frequency signal, to obtain the second-frequency offset estimation value. The L-STF signal is a first 8 μs part of the second-frequency signal $X_1(\text{t})$.

The following describes an example of specific steps in which a baseband chip 224 performs second-frequency frequency offset estimation.

Assuming that a frequency offset is $\Delta f$, a signal received by a $k^{\text{th}}$ receive link is as the following formula (2).

$$r_k(n) = x_{L-STF}(n)e^{j2\pi n T_s \Delta f} + w_k(n) = x_{L-STF}(n)e^{j2\pi n \gamma / N} + w_k(n) \quad (2)$$

$x_{L-STF}(n)$ is an L-STF signal received by the $k^{\text{th}}$ receive link, $w_k(n)$ is noise, $\gamma$ is a carrier frequency offset obtained by normalizing a subcarrier spacing, $T$ is a signal periodicity, N is a quantity of inverse discrete Fourier transform (Inverse Discrete Fourier Transform, IDFT) points, $T_s = \frac{T}{N}$, $\gamma = \Delta f \cdot T = \frac{\Delta f}{\Delta F}$, and $\Delta F$ is the subcarrier spacing. In this embodiment, k may be 1.

A phase that is of $r_k(n)$ and that is calculated by a second-frequency offset estimation module of the baseband chip 224 by using the following formula (3) is $angleR(\tau) = 2\pi D\gamma / N$. In this way, an obtained frequency offset estimation value is as the following formula (4).

$$R_\tau = \sum_{n=0}^{L-1} r_k^*(n) \cdot r_k(n+D)$$

$$= \sum_{n=0}^{L-1} |x_{L-STF}(n)|^2 \, e^{j2\pi D\gamma/N}$$

$$+ \sum_{n=0}^{L-1} (x_{L-STF}^*(n)e^{-j2\pi n\gamma/N} \cdot w_k(n) + x_{L-STF}(n+D)e^{j2\pi(n+D)\gamma/N} \cdot w_k^*(n) + |w_k(n)|^2)$$

$$(3)$$

D is a signal receiving interval, L is a length of a received signal, $r_k^*$ and $w_k^*$ are respectively conjugate transpositions of $r_k$ and $w_k$, n is a position of a signal sampling point, L=D=16, and N=64.

$$\gamma_c = \frac{N}{2\pi D} \cdot angle(R_\tau) = \frac{N}{2\pi D} \cdot angle(\sum_{n=0}^{L-1} r_k^*(n) \cdot r_k(n+D)) \qquad (4)$$

Optionally, the foregoing frequency offset estimation algorithm is performed by a first-frequency offset estimation module and the second-frequency offset estimation module of the baseband chip 224 in the receiver 220.

Step 620: The receiver 220 performs normalization processing on the second-frequency offset estimation value to the first-frequency offset estimation value to obtain a final first-frequency offset estimation value and a final second-frequency offset estimation value.

For example, the receiver 220 performs normalization processing on a second-frequency offset estimation value $r_1$ to a first-frequency offset estimation value $r_2$ by using the following formula (5).

$$r_1 = R_1/(\frac{45}{5.5}) \quad (5)$$

After the first-frequency offset estimation module sends the first-frequency offset estimation value to the second-frequency offset estimation module, the second-frequency offset estimation module performs weighted processing on the first-frequency offset estimation value and the second-frequency offset estimation value, to correct the second-frequency offset estimation value by using the first-frequency offset estimation value. The following describes in detail a weighted processing step with reference to FIG. 7. The second-frequency offset estimation module of the baseband chip 224 is used as an example. The step may include the following step 710 and step 720.

Step 710: The second-frequency offset estimation module obtains the first-frequency offset estimation value from the first-frequency offset estimation module.

Step 720: The second-frequency offset estimation module performs weighted processing on the first-frequency offset estimation value and the second-frequency offset estimation value to obtain a frequency offset estimation result.

The second-frequency offset estimation value $r_1$ and the first-frequency offset estimation value $r_2$ are still used as an example. The frequency offset estimation result is $r_3 = r_1 * W_1 + r_2 * W_2$, where $W_1$ is a weight of the second-frequency signal, $W_2$ is a weight of the first-frequency signal, and both $W_1$ and $W_2$ are empirical values obtained through simulation.

After the receiver 220 obtains the frequency offset estimation result in step 450 shown in FIG. 4, a frequency offset correction step is further included. Therefore, next, the frequency offset correction step is described in detail by still using the frequency offset estimation result $r_3$ as an example.

A frequency offset correction module of the receiver 220 calculates a crystal correction value k based on the frequency offset estimation result $r_3$, and $k=r_3/n$, where n is a fixed coefficient and is a ratio of a first-frequency operating frequency of the receiver 220 to a crystal operating frequency. For example, the crystal operating frequency is 10 MHz. In this case, n=5500/10=550.

The frequency offset correction module of the receiver 220 configures k to the crystal, to perform frequency offset correction.

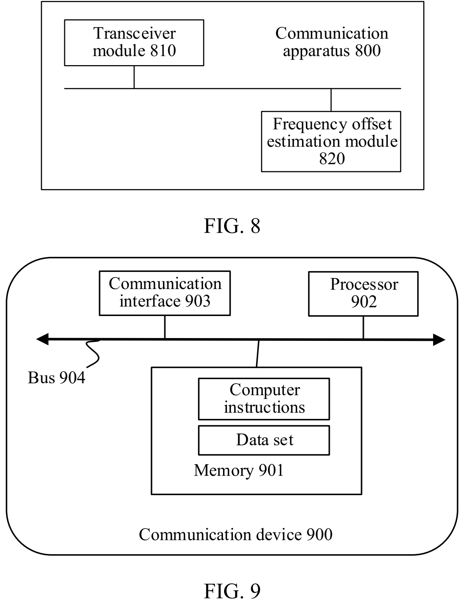

The foregoing describes in detail the communication method provided in embodiments with reference to FIG. 4 to FIG. 7. The following describes a communication apparatus provided in embodiments with reference to FIG. 8.

FIG. 8 is a diagram of a possible communication apparatus according to this embodiment. The communication apparatus may be configured to implement a function of the execution device in the foregoing method embodiments, and therefore can also achieve beneficial effects of the foregoing method embodiments. In this embodiment, the communication apparatus may be a transmitter 210 or a receiver 220 shown in FIG. 2, or may be a module (for example, a chip) used in a server.

The communication apparatus 800 includes a transceiver module 810 and a frequency offset estimation module 820.

The transceiver module 810 is configured to obtain a first-frequency signal and a second-frequency signal, where the first-frequency signal and the second-frequency signal are baseband signals having a same clock signal, and a frequency of the first-frequency signal is lower than a frequency of the second-frequency signal. For example, the transceiver module 810 is configured to perform step 420 and step 430 in FIG. 4.

The frequency offset estimation module 820 is configured to separately perform frequency offset estimation on the first-frequency signal and the second-frequency signal to obtain a first-frequency offset estimation value and a second-frequency offset estimation value. For example, the frequency offset estimation module 820 is configured to perform step 440 in FIG. 4.

The frequency offset estimation module 820 is further configured to calculate a frequency offset estimation result based on the first-frequency offset estimation value and the second-frequency offset estimation value. For example, the frequency offset estimation module 820 is configured to perform step 450 in FIG. 4.

In a possible implementation, the frequency offset estimation module 820 is specifically configured to perform weighted processing on the first-frequency offset estimation value and the second-frequency offset estimation value to obtain the frequency offset estimation result.

In a possible implementation, the frequency offset estimation module 820 is specifically configured to add a product of the first-frequency offset estimation value and a first-frequency weight to a product of the second-frequency offset estimation value and a second-frequency weight to obtain the frequency offset estimation result.

In a possible implementation, the frequency offset estimation module 820 is specifically configured to perform normalization processing on the first-frequency offset estimation value and the second-frequency offset estimation value.

In a possible implementation, the transceiver module 810 is specifically configured to separately perform analog domain processing on a received first-frequency radio frequency signal and a received second-frequency radio frequency signal to obtain the first-frequency signal and the second-frequency signal.

In a possible implementation, the transceiver module 810 is specifically configured to: replace an existing latched value of the first-frequency offset estimation value with the first-frequency offset estimation value; and replace an existing latched value of the second-frequency offset estimation value with the second-frequency offset estimation value.

In a possible implementation, the communication apparatus further includes a frequency offset correction module, configured to perform frequency offset correction based on the frequency offset estimation result.

In a possible implementation, a frequency difference between the first-frequency signal and the second-frequency signal is greater than a preset difference.

Optionally, the preset difference is 8 GHz, 10 GHz, 12 GHz, or the like.

In a possible implementation, the first-frequency signal is a signal in a sub-7 frequency band, and the second-frequency signal is a signal in a millimeter-wave frequency band.

It should be understood that, the communication apparatus 800 in this embodiment of this application may be implemented by using a CPU, a GPU, an NPU, an ASIC, or a programmable logic device (programmable logic device, PLD). The PLD may be a complex program logic device (complex programmable logical device, CPLD), a field-programmable gate array (field-programmable gate array, FPGA), a generic array logic (generic array logic, GAL), or any combination thereof. In addition, when the method shown in FIG. 4 is implemented by using software, modules of the communication apparatus 800 may alternatively be software modules.

The communication apparatus 800 in this embodiment of this application may correspondingly perform the method described in embodiments of this application. In addition, the foregoing operations and other operations and/or functions of units in the communication apparatus 800 are respectively for implementing corresponding procedures of the method in FIG. 4. For brevity, details are not described herein again.

An embodiment of this application further provides a communication device. FIG. 9 is a diagram of a structure of a communication device according to an embodiment of this application. The communication device 900 includes a memory 901, a processor 902, a communication interface 903, and a bus 904. The memory 901, the processor 902, and the communication interface 903 implement communication connection with each other through the bus 904. In this embodiment, the communication device 900 may be a receiver 220 or a transmitter 210 in FIG. 2.

The memory 901 may be a read-only memory, a static storage device, a dynamic storage device, or a random access memory. The memory 901 may store computer instructions. When the computer instructions stored in the memory 901 are executed by the processor 902, the processor 902 and the communication interface 903 are configured to perform steps of a data processing method in a software system. For example, the communication interface 903 is configured to perform step 410 and step 420 in FIG. 4, and the processor 902 is configured to perform step 430 to step 460 shown in FIG. 4 and a function of a frequency offset estimation module 820 in the communication apparatus 800 described in FIG. 8.

The processor 902 may be a general-purpose CPU, an application-specific integrated circuit (application-specific integrated circuit, ASIC), a GPU, or any combination thereof. The processor 902 may include one or more chips.

The processor 902 may include an AI accelerator, for example, an NPU.

The communication interface 903 uses a transceiver module, for example, but not limited to, a transceiver, to implement communication between the communication device 900 and another device or a communication network.

The bus 904 may include a path for transmission of information between components (for example, the memory 901, the processor 902, and the communication interface 903) of the communication device 900.

The communication device 900 may be a computer (for example, a server) in a cloud data center, or a computer or a terminal in an edge data center.

Method steps in embodiments may be implemented in a hardware manner, or may be implemented by a processor by executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a terminal device. Certainly, the processor and the storage medium may alternatively exist in a network device or a terminal device as discrete components.

All or some of the foregoing embodiments may be implemented by using software, hardware, firmware, or any combination thereof. When software is used for implementing embodiments, all or some of embodiments may be implemented in a form of a computer program product. The computer program product includes one or more computer programs or instructions. When the computer programs or the instructions are loaded and executed on a computer, all or some of procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, such as a floppy disk, a hard disk, or a magnetic tape; or may be an optical medium, for example, a digital video disc (digital video disc, DVD); or may be a semiconductor medium, for example, a solid state drive (solid state drive, SSD). The foregoing descriptions are merely specific implementations of this application, but the protection scope of this application is not limited thereto. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   obtaining a first-frequency signal and a second-frequency signal, wherein the first-frequency signal and the second-frequency signal are baseband signals having a same clock signal, and a frequency of the first-frequency signal is lower than a frequency of the second-frequency signal;
   separately performing frequency offset estimation on the first-frequency signal and the second-frequency signal to obtain a first-frequency offset estimation value and a second-frequency offset estimation value; and
   calculating a frequency offset estimation result based on the first-frequency offset estimation value and the second-frequency offset estimation value.

2. The method according to claim 1, wherein calculating the frequency offset estimation result based on the first-frequency offset estimation value and the second-frequency offset estimation value comprises:
   performing weighted processing on the first-frequency offset estimation value and the second-frequency offset estimation value to obtain the frequency offset estimation result.

3. The method according to claim 2, wherein performing weighted processing on the first-frequency offset estimation value and the second-frequency offset estimation value to obtain the frequency offset estimation result comprises:
   adding a product of the first-frequency offset estimation value and a first-frequency weight to a product of the second-frequency offset estimation value and a second-frequency weight to obtain the frequency offset estimation result.

4. The method according to any one of claims 1 to 3, wherein separately performing frequency offset estimation on the first-frequency signal and the second-frequency signal to obtain the first-frequency offset estimation value and the second-frequency offset estimation value comprises:
separately performing frequency offset estimation and normalization processing on the first-frequency signal and the second-frequency signal to obtain the first-frequency offset estimation value and the second-frequency offset estimation value.

5. The method according to any one of claims 1 to 4, wherein obtaining the first-frequency signal and the second-frequency signal comprises:
separately performing analog domain processing on a received first-frequency radio frequency signal and a received second-frequency radio frequency signal to obtain the first-frequency signal and the second-frequency signal.

6. The method according to any one of claims 1 to 5, wherein the method further comprises:
performing frequency offset correction based on the frequency offset estimation result.

7. The method according to any one of claims 1 to 6, wherein a frequency difference between the first-frequency signal and the second-frequency signal is greater than or equal to a preset difference.

8. The method according to any one of claims 1 to 7, wherein the first-frequency signal is a signal in a sub-7G frequency band, and the second-frequency signal is a signal in a millimeter-wave frequency band.

9. A communication apparatus, comprising:

   a transceiver module, configured to obtain a first-frequency signal and a second-frequency signal, wherein the first-frequency signal and the second-frequency signal are baseband signals having a same clock signal, and a frequency of the first-frequency signal is lower than a frequency of the second-frequency signal; and
   a frequency offset estimation module, configured to separately perform frequency offset estimation on the first-frequency signal and the second-frequency signal to obtain a first-frequency offset estimation value and a second-frequency offset estimation value, wherein
   the frequency offset estimation module is further configured to calculate a frequency offset estimation result based on the first-frequency offset estimation value and the second-frequency offset estimation value.

10. A communication device, wherein the communication device comprises a memory and a processor, and the memory is configured to store a group of computer instructions; and when executing the group of computer instructions, the processor performs an operation step of the method according to any one of claims 1 to 8.

11. A communication system, wherein the communication system comprises a receiver and a transmitter, the transmitter is configured to send a first-frequency radio frequency signal and a second-frequency radio frequency signal, and the receiver is configured to receive the first-frequency radio frequency signal and the second-frequency radio frequency signal and perform an operation step of the method according to any one of claims 1 to 8 based on the first-frequency radio frequency signal and the second-frequency radio frequency signal.

12. A readable storage medium, wherein the readable storage medium comprises a computer program or instructions; and when the computer program or the instructions are run on a computer, the computer is enabled to perform an operation step of the method according to any one of claims 1 to 8.

Ideal          Actual
frequency    frequency

Transmitter                                                              Frequency

Ideal
frequency

Receiver                                                                 Frequency

Frequency offset range
tolerable to the receiver

FIG. 1a

Sub-7G radio frequency processing → Sub-7G frequency offset estimation → Sub-7G frequency offset compensation

Sub-7G baseband signal demodulation

Millimeter-wave radio frequency processing → Millimeter-wave frequency offset estimation → Millimeter-wave frequency offset compensation

Millimeter-wave baseband signal demodulation

FIG. 1b

MMSE

FIG. 1c

FIG. 2

220

| Baseband chip 224 | | | Radio frequency chip 223 | 221 |
|---|---|---|---|---|

FIG. 3

Transmitter 210

Step 410: Send a first-frequency communication signal and a second-frequency communication signal

First-frequency communication signal

Step 420: Receive the first-frequency communication signal and the second-frequency communication signal

Second-frequency communication signal

Receiver 220

221

222

Radio frequency chip 223

First-frequency analog domain processing module

Step 430: Separately perform analog domain processing on the first-frequency communication signal and the second-frequency communication signal

Second-frequency analog domain processing module

First-frequency signal

Second-frequency signal

Baseband chip 224

First-frequency offset estimation module

Step 440: Separately perform frequency offset estimation on the first-frequency signal and the second-frequency signal

Second-frequency offset estimation module

First-frequency offset estimation value

Second-frequency offset estimation value

First-frequency control module

First-frequency offset estimation value

Second-frequency control module

Frequency offset estimation result

Step 450: Calculate a frequency offset estimation result based on the first-frequency offset estimation value and the second-frequency offset estimation value

Frequency offset correction module

Step 460: Perform frequency offset correction based on the frequency offset estimation result

FIG. 4

19

Receiver 220

Radio frequency chip 223

Step 510: Separately perform down-conversion on a first-frequency communication signal and a second-frequency communication signal

First-frequency conversion signal and second-frequency conversion signal

Step 520: Separately perform filtering on the first-frequency conversion signal and the second-frequency conversion signal

First-frequency filtered signal and second-frequency filtered signal

Step 530: Separately perform amplification on the first-frequency filtered signal and the second-frequency filtered signal

First-frequency signal and second-frequency signal

Baseband chip 224

FIG. 5a

```
┌─────────────────┐          ┌─────────────────┐
│ Receive a second-│          │ Receive a first-│
│ frequency signal │          │ frequency signal│
└────────┬────────┘          └────────┬────────┘
         │                            │
         ▼                            ▼
┌─────────────────┐          ┌─────────────────┐
│  Estimate a     │          │  Estimate a     │
│ frequency offset│          │ frequency offset│
│   of the second-│          │ of the first-   │
│ frequency signal│          │ frequency signal│
└────────┬────────┘          └────────┬────────┘
         │                            │
         ▼                            ▼
┌─────────────────┐          ┌─────────────────┐
│ Latch a frequency│          │ Latch a frequency│
│ offset estimation│          │ offset estimation│
│      value       │          │      value       │
└────────┬────────┘          └────────┬────────┘
         │                            │
         ▼                            │
┌─────────────────┐                   │
│   Weighted      │◄──────────────────┘
│  processing     │
└────────┬────────┘
         │
         ▼
┌─────────────────┐
│Frequency offset │
│   correction    │
└─────────────────┘
```

FIG. 5b

Receiver 220

Baseband chip 224

Step 610: Separately perform frequency offset estimation on a first-frequency signal and a second-frequency signal

First-frequency offset estimation value and second-frequency offset estimation value

Step 620: Perform normalization processing on the second-frequency offset estimation value to the first-frequency offset estimation value to obtain a final first-frequency offset estimation value and a final second-frequency offset estimation value

FIG. 6

Receiver 220

Baseband chip 224

Step 710: A second-frequency offset estimation module obtains a first-frequency offset estimation value from a first-frequency offset estimation module

Step 720: The second-frequency offset estimation module performs weighted processing on the first-frequency offset estimation value and a second-frequency offset estimation value to obtain a frequency offset estimation result

FIG. 7

Communication apparatus 800

| Transceiver module 810 |

| Frequency offset estimation module 820 |

FIG. 8

Communication device 900

| Communication interface 903 | | Processor 902 |

Bus 904

Memory 901
| Computer instructions |
| Data set |

FIG. 9

## INTERNATIONAL SEARCH REPORT

| International application No. |
|---|
| **PCT/CN2023/136837** |

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

IPC:H04L H04W H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 频偏, frequency offset, 估计, estimat+, 校正, 校准, 修正, correct+, 加权, weight+, 频段, frequency band, 基带信号, baseband signal

### C. DOCUMENTS CONSIDERED TO BE RELEVANT

| Category* | Citation of document, with indication, where appropriate, of the relevant passages | Relevant to claim No. |
|---|---|---|
| X | CN 108600132 A (SHENZHEN SHENGLU IOT COMMUNICATION TECHNOLOGY CO., LTD.) 28 September 2018 (2018-09-28)<br>description, paragraphs 35-177 | 1-12 |
| A | CN 109729032 A (SANECHIPS TECHNOLOGY CO., LTD.) 07 May 2019 (2019-05-07)<br>entire document | 1-12 |
| A | CN 114584449 A (UNIVERSITY OF ELECTRONIC SCIENCE AND TECHNOLOGY OF CHINA) 03 June 2022 (2022-06-03)<br>entire document | 1-12 |
| A | US 2013315293 A1 (HUAWEI TECHNOLOGIES CO., LTD.) 28 November 2013 (2013-11-28)<br>entire document | 1-12 |
| A | WO 2023273363 A1 (CHONGQING UNIVERSITY OF POSTS AND TELECOMMUNICATIONS) 05 January 2023 (2023-01-05)<br>entire document | 1-12 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 February 2024** | **01 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 108600132 | A | 28 September 2018 | None | | | |
| CN | 109729032 | A | 07 May 2019 | None | | | |
| CN | 114584449 | A | 03 June 2022 | None | | | |
| US | 2013315293 | A1 | 28 November 2013 | WO | 2012126429 | A2 | 27 September 2012 |
| | | | | EP | 2621138 | A2 | 31 July 2013 |
| | | | | CN | 102783107 | A | 14 November 2012 |
| WO | 2023273363 | A1 | 05 January 2023 | CN | 113452466 | A | 28 September 2021 |

International application No.

**PCT/CN2023/136837**

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310358559